# EUROPEAN PATENT SPECIFICATION

(11) **EP 2 806 550 B1**
(45) Date of publication and mention of the grant of the patent: **13.11.2019**
(21) Application number: 14153953.6
(22) Date of filing: 05.02.2014
(51) Int. Cl.: H02M 3/335, H02M 1/00

(54) **Power supply unit and image forming apparatus**
Netzteileinheit und Bilderzeugungsvorrichtung
Unité de source d'alimentation et appareil de formation d'image

(30) Priority: 21.02.2013 JP 2013031857; 13.03.2013 JP 2013050871
(43) Date of publication of application: 26.11.2014
(73) Proprietor: Ricoh Company, Ltd., Tokyo 143-8555 (JP)
(72) Inventor: Komai, Kunihiro, Tokyo, 143-8555, (JP); Kawamoto, Takayuki, Tokyo, 143-8555, (JP); Yashiro, Akira, Tokyo, 143-8555, (JP)
(74) Representative: SSM Sandmair

(56) References cited:
- EP-A1- 2 339 732
- JP-A- 2002 078 329
- JP-A- 2007 330 078
- US-A1- 2010 315 050

## Description

### BACKGROUND OF THE INVENTION

### 1. Field of the Invention

The present invention relates to a power supply unit and an image forming apparatus having the power supply unit.

### 2. Description of the Related Art

In an electrophotographic apparatus or an image forming apparatus of an electrophotographic type such as an electrophotographic copier, a laser printer, a facsimile machine or the like, a high-voltage power supply unit is provided. The high-voltage power supply unit is used to supply high voltages such as a photoreceptor electrification bias, a developing bias, a supply bias, a regulation bias, a transfer bias, a fixing bias and so forth. The high-voltage power supply unit includes a step-up transformer for generating these biases or high voltages. The high-voltage power supply unit preferably outputs stable high voltages under various conditions.

Outputs of such a high-voltage power supply unit are used, for example, to operate a developing roller and a supply roller included in an image forming part in an image forming apparatus. By applying high voltages (a developing bias and a supply bias) to the developing roller and the supply roller, a fixed amount of toner is supplied from the supply roller to the developing roller.

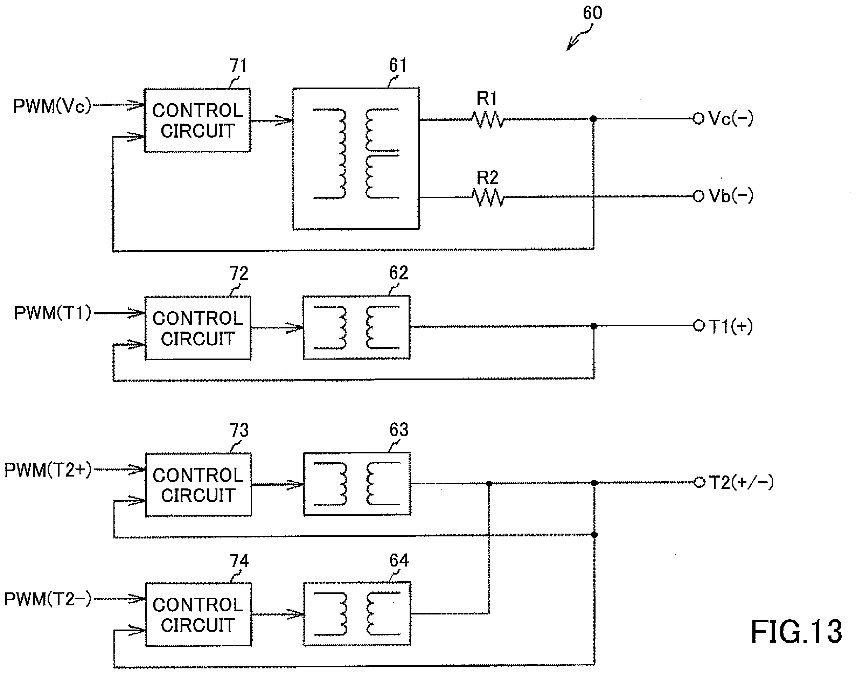

FIG. 13 is a block diagram showing one example of a high-voltage power supply unit in the related art.

- A high-voltage power supply unit 60 shown in FIG. 13 includes four transformers 61-64, and control circuits 71-74 that control the transformers 61-64, respectively. In the respective transformers 61-64, transformers and rectifying and smoothing circuits (now shown) are provided, respectively.

From a power supply apparatus (not shown), a pulse-width-modulated signal PWM(Vc) is input to the control circuit 71, a pulse-width-modulated voltage PWM(T1) is input to the control circuit 72, a pulse-width-modulated voltage PWM(T2+) is input to the control circuit 73 and a pulse-width-modulated voltage PWM(T2-) is input to the control circuit 74. The pulse widths in the voltages thus input to the control circuits 71-74, respectively, are controlled by a CPU in the power supply apparatus.

Then, from a transformer 61 in the high-voltage power supply unit 60, voltages Vc(-) and Vb(-) are output. From a transformer 62, a voltage T1(+) is output. From transformers 63 and 64, a voltage T2(+/-) is output. These voltages are supplied to be used as bias voltages in an image forming apparatus. The voltage Vc denotes an electrification voltage, the voltage T1 denotes a primary transfer voltage, the voltage T2 denotes a secondary transfer voltage.

Note that, the signs "+" and "-" in the parentheses "()" denote the polarities of voltages, respectively, and "+/-" denotes the polarity of the voltage can be set to either positive (+) or negative (-).

Thus, in the example of FIG. 13, the voltages Vc(-) and Vb(-) are generated by the transformer 61, the voltage T1(+) is generated by the transformer 62 and the voltage T2(+/-) is generated by the transformers 63 and 64.

The voltage values of the output voltages Vc(-) and Vb(-) are set by the duty ratio in the voltage of the input signal PWM(Vc). By the control circuit 71, based on the feedback value of the voltage Vc(-) and the voltage of the input signal PWM(Vc), the output voltages Vc(-) and Vb(-) are set. It is assumed that the two output voltages Vc(-) and Vb(-) of the transformer 61 have negative polarity.

Similarly, the voltage value of the output voltage T1(+) is set by the duty ratio in the voltage of the input signal PWM(T1). By the control circuit 72, based on the feedback value of the voltage T1(+) and the voltage of the input signal PWM(T1), the output voltages T1(+) of the transformer 62 is set.

Further, when an output voltage T2(+) of T2(+/-) is to be output, the transformer 63 is driven but the transformer 64 is not driven. Further, when an output voltage T2(-) of T2(+/-) is to be output, the transformer 63 is not driven but the transformer 64 is driven.

The voltage value of the output voltage T2(+) is set by the duty ratio in the voltage of the input signal PWM(T2+). By the control circuit 73, based on the feedback value of the voltage T2(+) and the voltage of the input signal PWM(T2+), the output voltage T2(+) of the transformer 63 is set.

The voltage value of the output voltage T2(-) is set by the duty ratio in the voltage of the input signal PWM(T2-). By the control circuit 74, based on the feedback value of the voltage T2(-) and the voltage of the input signal PWM(T2-), the output voltage T2(-) of the transformer 64 is set.

In the high-voltage power supply unit 60, the output voltages Vc(-) and Vb(-) are generated by only one transformer, i.e., the transformer 61, and thus, the high-voltage power supply unit 60 has a cost advantage.

Japanese Laid-Open Patent Application No. 2009-232488 (Patent Reference No. 1) discloses a high-voltage power supply unit that generates a plurality of outputs with a single transformer. Patent Reference No. 1 discloses a high-voltage power supply unit in which, in order to supply power-supply voltages that are stable and can follow load variations in a plurality of loads without destroying circuits, the turning on and off of primary and secondary switching elements provided in a plurality of DC generation circuits is carried out appropriately. That is, in the high-voltage power supply unit of Patent Reference No. 1, when the primary switching elements are in "on" states, the secondary switching elements set the output power supply lines to have floating states. When the primary switching elements are in "off" states, the secondary switching elements set the output power supply lines to have "on" states.

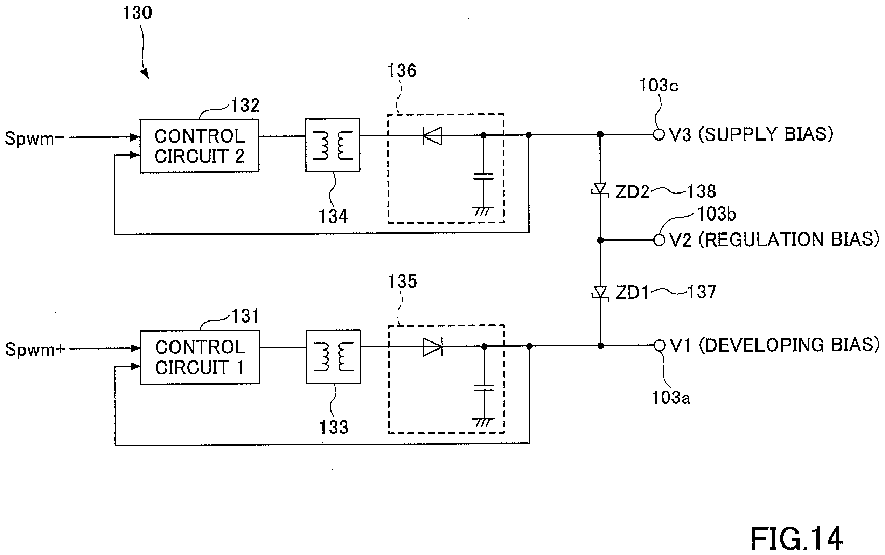

Another example of a high-voltage power supply unit 130 in the related art will now be described using FIG. 14. The high-voltage power supply unit 130 outputs a developing bias (voltage VI), a regulation bias (voltage V2) and a supply bias (voltage V3).

The high-voltage power supply unit 130 generates the voltages V1, V2 and V3 based on a PWM(+) signal Spwm+ or a PWM(-) signal Spwm-, and outputs the voltages VI, V2 and V3 from terminals 103a, 103b and 103c, respectively, as shown in FIG. 14.

The high-voltage power supply unit 130 includes control circuits 131, 132, transformers 133, 134, rectifying and smoothing circuits 135, 136 and Zener diodes 137, 138. Between the terminal 103a and the terminal 103b, the Zener diodes 137, 138 are inserted.

For example, in a case of inputting the PWM(+) signal Spwm+ to the control circuit 131, the PWM(-) signal Spwm- is not input simultaneously, for the purpose of stabilizing the voltage between the terminal 103a and the terminal 103c. In this case, from the terminals 103a, 103b and 103c, the positive voltages (same polarity) are output at any time. That is, the voltages V1, V2 and V3 are generated by the control circuit 131 and the transformer 133.

The voltage V1 at the terminal 103a is set by the PWM(+) signal Spwm+ that is input to the control circuit 131 and the feedback value of the voltage V1. Setting of the voltage V1 is carried out based on the duty ratio in the voltage of the PWM(+) signal Spwm+. The voltage V2 at the terminal 103b is obtained from subtracting the voltage drop caused by the Zener diode 137 from the voltage V1. The voltage V3 at the terminal 103c is obtained from subtracting the voltage drop caused by the Zener diode 138 from the voltage V2.

Similarly, for example, in a case of inputting the PWM(-) signal Spwm- to the control circuit 132, the PWM(+) signal Spwm+ is not input simultaneously, for the purpose of stabilizing the voltage between the terminal 103a and the terminal 103c. In this case, from the terminals 103a, 103b and 103c, the negative voltages (same polarity) are output at any time. That is, the voltages VI, V2 and V3 are generated by the control circuit 132 and the transformer 134.

The voltage V3 at the terminal 103c is set by the PWM(-) signal Spwm- that is input to the control circuit 132 and the feedback value of the voltage V3. Setting of the voltage V3 is carried out based on the duty ratio in the voltage of the PWM(-) signal Spwm-. The voltage V2 at the terminal 103b is obtained from subtracting the voltage drop caused by the Zener diode 138 from the voltage V3. The voltage V1 at the terminal 103a is obtained from subtracting the voltage drop caused by the Zener diode 137 from the voltage V2.

That is, in the high-voltage power supply unit 130 in the related art shown in FIG. 14, the voltages of the same polarity are output from the terminals 103a, 103b and 103c.

Japanese Laid-Open Patent Application No. 2007-52690 (Patent Reference No. 2) discloses a power supply unit that includes one power supply circuit having an output terminal that outputs a positive voltage and another power supply circuit having an output terminal that outputs a negative voltage. The respective output terminals are connected by a Zener diode and voltages generated at both terminals of the Zener diode are applied to a developing roller and a supply roller.
Also document EP2339732 discloses a multiple output power supply unit including a transformer for an image forming appartus.

### SUMMARY OF THE INVENTION

According to one aspect of the present invention, a power supply unit a first output terminal that outputs a voltage in a first polarity compared to ground;a second output terminal (10B) that outputs a voltage changeable between a voltage in the first polarity and a voltage in a second polarity, compared to ground, different from the first polarity; characterized by a transformer (T) having primary winding, a first secondary winding and a second secondary winding;a first rectifying and smoothing circuit that rectifies and smoothes an output of the first secondary winding and outputs a voltage in the first polarity to the first output terminal; a second rectifying and smoothing circuit that rectifies and smoothes an output of the second secondary winding and outputs a voltage in the second polarity; first control means to which a PWM input signal is applied, the first control means including an operational amplifier, a power transistor and an RC circuit comprising a resistor and a capacitor and; second output control means for controlling the voltage that is output from the second output terminal, the second output control means including a series circuit of a fixed resistance part and a variable resistance part connected in series, wherein one terminal of the fixed resistance part is connected with an output terminal of the second rectifying and smoothing circuit and the other terminal is connected to the second output terminal and wherein one terminal of the variable resistance part is connected to the first output terminal and the other terminal of the variable resistance part is connected to the second output terminal; and a control part that outputs a control signal for changing a resistance value of the variable resistance part; wherein the PWM input signal is smoothed by the RC circuit and a feedback voltage of the voltage at the first output terminal are input to the operational amplifier and the output of the operational amplifier is supplied to the base of the power transistor and controls the current that flows through the power transistor so as to control the output voltage to be applied to the primary winding of the transformer.

Other objects, features and advantages of the present invention will become more apparent from the following detailed description when read in conjunction with the accompanying drawings.

### BRIEF DESCRIPTION OF THE DRAWINGS

FIG. 1 shows an image forming apparatus that can employ a high-voltage power supply unit according to a first embodiment;
FIG. 2 shows a general configuration of the high-voltage power supply unit according to the first embodiment;
FIG. 3 is a circuit diagram of a first transformer-rectifier device in the high-voltage power supply unit shown in FIG. 2;
FIG. 4 shows voltages at respective points in the circuit shown in FIG. 3;
FIG. 5 is a circuit diagram of a first example of a variable resistance part in the high-voltage power supply unit according to the first embodiment;
FIG. 6 is a circuit diagram of a second example of the variable resistance part in the high-voltage power supply unit according to the first embodiment;
FIG. 7 is a circuit diagram of a third example of a variable resistance part in the high-voltage power supply unit according to the first embodiment;
FIG. 8 shows one example of a configuration of a high-voltage power supply unit;
FIG. 9 shows one example of a configuration of a high-voltage power supply unit according to a variant of the example of Fig. 8.
FIG. 10 shows one example of a circuit configuration of the high-voltage power supply unit;
FIG. 11 shows an image forming apparatus according to an embodiment;
FIG. 12 shows one example of biases to be applied to a developing device according to an embodiment;
FIG. 13 shows one example of a high-voltage power supply unit in the related art; and
FIG. 14 shows another example of a high-voltage power supply unit in the related art.

### DETAILED DESCRIPTION OF THE EMBODIMENTS

Below, the embodiments will be described.

### (First Embodiment)

For the sake of convenience, a problem to be solved by the first embodiment will be described first.

In the above-mentioned high-voltage power supply unit in the related art show in FIG. 13, it is not possible to linearly change the output of one output terminal from a positive voltage to a negative voltage. Note that such a manner of changing an output linearly from a positive voltage to a negative voltage will be simply referred to as "positive-to-negative linear change", hereinafter. An art is known to add an output of a positive transformer and an output of a negative transformer together so as to output a desired positive or negative voltage. However, when outputs are thus added together, overshooting or undershooting may occur when the timing of starting or stopping the positive and negative transformers are not precisely coincident, and as a result, a horizontal stripe may appear on an output image that is output from an image forming apparatus employing the high-voltage power supply unit supplying the necessary biases (high-voltage power-supply voltages). Such an output image including a horizontal stripe may be regarded as a useless defect image.

As to the high-voltage power supply unit disclosed by Patent Reference No. 1, the above-mentioned problem of not being able to output a voltage in the negative-to-positive linear manner from a specific single output terminal cannot be solved.

The first embodiment has been devised in consideration of the above-mentioned problem, and an objective of the first embodiment is to provide a power supply unit in which it is possible to generate a plurality of biases (power-supply voltages) by using a single transformer, and also, to output a desired positive or negative power-supply voltage linearly from a single terminal without causing overshooting or undershooting at a time of starting or stopping the use of the transformer.

A high-voltage power supply unit according to the first embodiment and an image forming apparatus that can employ the high-voltage power supply unit will now be described. The high-voltage power supply unit according to the first embodiment has a transformer-rectifier device that includes a single transformer. According to the first embodiment, a variable resistance part is provided between an output terminal of the transformer-rectifier device for a positive voltage and an output terminal of the transformer-rectifier device for a negative voltage. Further, the output having the positive voltage and the output having the negative voltage are added together, the resistance value of the variable resistance part is changed, and thus, a high-voltage DC power is output from an output terminal in the above-mentioned negative-to-positive linear manner.

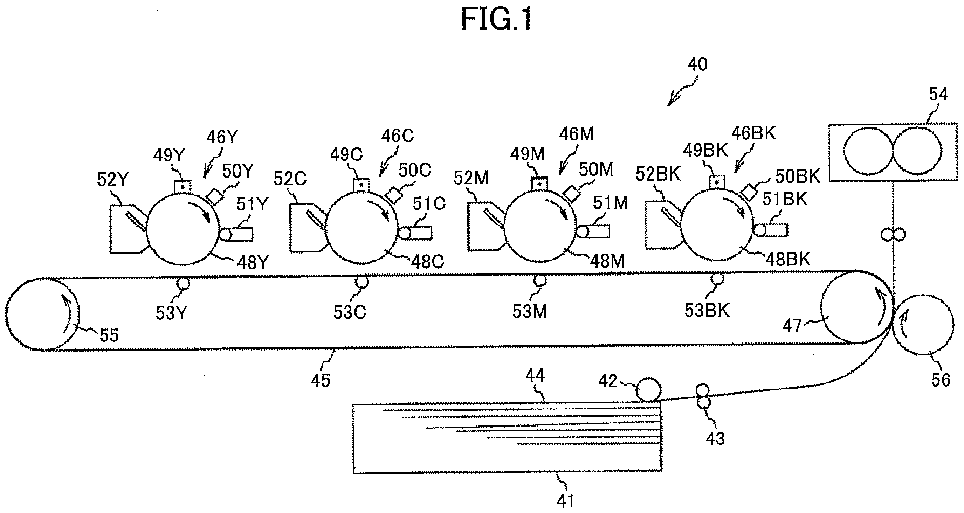

First, an image forming apparatus employing a high-voltage power supply unit according to the first embodiment will be described. FIG. 1 shows an image forming apparatus employing a high-voltage power supply unit according to the first embodiment.

The image forming apparatus 40 is an electrophotographic color printer. The image forming apparatus 40 is a tandem color printer in which image forming parts 46BK, 46M, 46C and 46Y for respective colors are placed along a primary transfer belt 45. That is, in the image forming apparatus 40, along the primary transfer belt 45, the plurality of image forming parts 46BK, 46M, 46C and 46Y are placed in the stated order from the upstream side in a moving direction of the primary transfer belt 45. These plurality of image forming parts 46BK, 46M, 46C and 46Y have mutually identical internal configurations except that the toner colors are different thereamong.

The image forming part 46BK forms a black (BK) image, the image forming part 46M forms a magenta (M) image, the image forming part 46C forms a cyan (C) image and the image forming part 46Y forms a yellow (Y) image. The image forming part 46BK has a configuration the same as or similar to those of the other image forming parts 46M, 46C and 46Y. Therefore, below, the image forming part 46BK will be described. As for the other image forming parts 46M, 46C and 46Y, reference numerals distinguished by "M", "C" and "Y" are given to respective components/elements, and description will be omitted.

The primary transfer belt 45 is a belt wound on a driven and rotated driving roller 47 and a driven roller 55. The driving roller 47 is driven and rotated by a driving motor (not shown). The driving motor, the driving roller 47 and the driven roller 55 function as a driving part that drives and rotates the primary transfer belt 45.

The image forming part 46BK includes a photoreceptor drum 48 as a photoreceptor. Further, around the photoreceptor drum 48BK, an electrification device 49BK, a LED head 50BK, a developing device 51BK, a photoreceptor cleaner (not shown), an electricity removal device 52BK and so forth are placed, in the image forming part 46BK. The LED head 50BK has a configuration of emitting light corresponding to a color of an image that the image forming part 46BK forms.

When an image is formed, the outer circumferential surface of the photoreceptor drum 48BK is uniformly electrified by the electrification device 49BK in a dark place. After that, the photoreceptor drum 48BK is exposed to light emitted by the LED head 50BK corresponding to an black image. Thus, an electrostatic latent image is formed. The developing device 51BK visualizes the electrostatic latent image with a black toner, and thereby, a black toner image is formed on the photoreceptor drum 58BK. This toner image is transferred to the primary transfer belt 45 at a position at which the photoreceptor drum 58BK and the primary transfer belt 45 come into contact with one another with a bias (power-supply voltage) applied to the primary transfer roller 58BK. From the photoreceptor drum 48BK from which the toner image has been thus transferred, useless toner left on the outer circumferential surface is cleaned by the photoreceptor cleaner. Thereafter, electricity is removed from the photoreceptor drum 48BK by the electricity removal device 52BK, and then, the photoreceptor drum 48BK waits for a subsequent image formation process.

The primary transfer belt 45 moves toward the subsequent image forming part 46M for a subsequent image to be formed thereon. In the image forming part 46M, in the same process as that in the image forming part 46BK, a magenta toner image is formed on the photoreceptor drum 48M, and the toner image is then transferred onto the black toner image formed on the primary transfer belt 45 in a superposing manner. The primary transfer belt 45 further moves to the subsequent image forming parts 46C and 46Y in sequence. Then, in similar operations, a cyan toner image formed on the photoreceptor drum 48C and a yellow toner image formed on the photoreceptor drum 48Y are transferred onto a primary transfer belt 45 in a superposing manner in sequence. Thus, on the primary transfer belt 45, a full color image is formed.

Onto a sheet of paper 44 separated and fed from a paper feeding tray 41 with a paper feeding roller 42 and a separation roller 43, the full color image is transferred from the primary transfer belt 45 at a position at which the primary transfer belt 45 and the sheet of paper 44 come into contact with one another with a bias (power-supply voltage) applied to a secondary transfer roller 56. Thereby, on the sheet of paper 44, the full color toner image is formed. The sheet of paper 44 on which the full color superposed image is formed is conveyed to a fixing device 54 that fixes the image onto the sheet of paper 44. Thereafter, the sheet of paper 44 is ejected to the outside of the image forming apparatus.

The biases (power-supply voltages) are supplied by the high-voltage power supply unit according to the first embodiment to the processing part that includes the electrification device 40BK, the developing device 51BK, the primary transfer roller 53BK and the secondary transfer roller 56. Note that, as a transfer method in the image forming apparatus, an intermediate transfer method has been described in which images of the respective colors are formed on the primary transfer belt 45, and the images are transferred to the sheet of paper 44 therefrom at the secondary transfer position. However, instead, the high-voltage power supply unit according to the first embodiment can also be used in an image forming apparatus employing a direct transfer method in which images of the respective colors are directly transferred to a sheet of paper in a similar way, and such an image forming apparatus is another embodiment using the high-voltage power supply unit. Further, the color tandem system has been described. However, the high-voltage power supply unit according to the first embodiment can also be applied to a monochrome image forming apparatus in which an image of only black is formed in a similar way, and such an image forming apparatus is yet another embodiment using the high-voltage power supply unit.

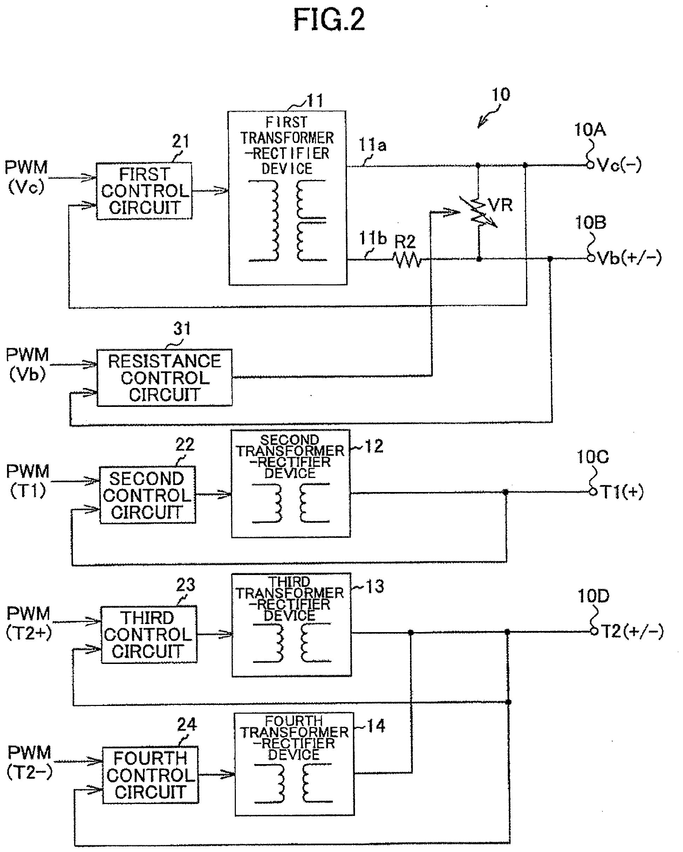

Next, the high-voltage power supply unit according to the first embodiment will be described. FIG. 2 shows a general configuration of the high-voltage power supply unit according to the first embodiment. The high-voltage power supply unit 10 according to the first embodiment includes four transformer-rectifier devices, i.e., a first transformer-rectifier device 11, a second transformer-rectifier device 12, a third transformer-rectifier device 13 and a fourth transformer-rectifier device 14. In each of the four transformer-rectifier devices 11-14, a transformer and a rectifying and smoothing circuit (not shown in FIG. 2) are provided. Further, the four transformer-rectifier devices 11-14 are controlled by control circuits 21-24, respectively, that are examples of control parts. That is, the signal that is input to the first transformer-rectifier device 11 is controlled by the first control circuit 21; the signal that is input to the second transformer-rectifier device 12 is controlled by the second control circuit 22; the signal that is input to the third transformer-rectifier device 13 is controlled by the third control circuit 23; and the signal that is input to the fourth transformer-rectifier device 14 is controlled by the fourth control circuit 24.

Further, the first transformer-rectifier device 11 has two output terminals 11a and 11b that output DC voltages of different polarities. That is, the output terminal 11a outputs a negative voltage (voltage in a first polarity) and the output terminal 11b outputs a positive voltage (voltage in a second polarity). Further, a resistor R2, which is one example of a fixed resistance part is connected to the output terminal 11b of the first transformer-rectifier device 11, and a variable resistor VR, which is one example of a variable resistance part is connected between the terminal at the output side of the resistor R2 (another terminal of the fixed resistance part) and the output terminal 11a. Note that the resistance (resistance value) of the variable resistor VR is controlled by a control signal that is output from a resistor control circuit 31.

In the high-voltage power supply 10, a signal PWM(Vc) is input to the first control circuit 21; a signal PWM(Vb) is input to the resistor control circuit 31; a signal PWM(T1) is input to the second control circuit 22; a signal PWM(T2+) is input to the third control circuit 23; and a signal PWM(T2-) is input to the fourth control circuit 24. These signals PWM(Vc), PWM(Vb), PWM(T1), PWM(T2+) and PWM(T2-) are modulated in a pulse width modulation manner, and are controlled by a CPU (not shown). Further, in the high-voltage power supply 10, an output terminal 10A (first output terminal) of the first transformer-rectifier device 11 outputs a voltage Vc(-); and an output terminal 10B (second output terminal) of the first transformer-rectifier device 11 outputs a voltage Vb(+/-). Further, an output terminal 10C of the second transformer-rectifier device 12 outputs a voltage T1(+); and an output terminal 10D of the third transformer-rectifier device 13 and the fourth transformer-rectifier device 14 outputs a voltage T2(+/-). These output voltages Vc(-), Vb(+/-), T1(+) and T2(+/-) are applied to loads. That is, the voltage Vc(-) is supplied as an electrification voltage; the voltage Vb(+/-) is supplied as a developing voltage; a voltage T1(+) is supplied as a primary transfer voltage; and a voltage T2(+/-) is supplied as a secondary transfer voltage. Thus, the output voltages Vc(-), Vb(+/-), T1(+) and T2(+/-) are supplied to the respective parts in the image forming apparatus.

In the first transformer-rectifier device 11, the output voltage Vc(-) at the output terminal 10A is set by the duty ratio in the voltage of the signal PWM(Vc). In detail, the voltage (voltage value) Vc(-) at the output terminal 11a of the first transformer-rectifier device 11 is controlled by the first control circuit 21 based on the feedback value of the output voltage Vc(-) and the input signal PWM(Vc). The output voltage Vb(+/-) at the output terminal 10B is generated as a result of adding the output voltage at the one output terminal 11a and the output voltage at the other output terminal 11b of the first transformer-rectifier device 11 together.

Note that the output voltage Vb(+/-) is obtained as a result of the voltage difference between the (negative) output voltage Vc(-) at the one output terminal 11a and the (positive) output voltage at the other output terminal 11b being divided by the variable resistor VR and the resistor R2.

The resistance value of the variable resistor VR is set by the resistor control circuit 31 based on the feedback value of the output voltage Vb(+/-) and the input signal PWM(Vb), and thus, the output voltage (output value) Vb(+/-) at the output terminal 10B can be changed linearly from a negative value to a positive value.

The output voltage T1(+) at the output terminal 10C is set by the duty ratio in the signal PWM(T1). In detail, the voltage (output value) T1(+) at the output terminal of the second transformer-rectifier device 12 is controlled by the second control circuit 22 based on the feedback value of the output voltage T1(+) and the input signal PWM(T1).

When a positive voltage T2(+) of the voltage T2(+/-) is to be output from the output terminal 10D, the third transformer-rectifier device 13 is driven and the fourth transformer-rectifier device 14 is not driven. On the other hand, when a negative voltage T2(-) of the voltage T2(+/-) is to be output from the output terminal 10D, the third transformer-rectifier device 13 is not driven and the fourth transformer-rectifier device 14 is driven.

Further, the output voltage value of the voltage T2(+) from the output terminal 10D is set by the duty ratio in the signal PWM(T2+), and the output voltage T2(+) of the third transformer-rectifier device 13 is set by the feedback value of the voltage T2(+) and the signal PWM(T2+) that are input to the third control circuit 23. Further, the output voltage value of the voltage T2(-) from the output terminal 10D is set by the duty ratio in the voltage of the signal PWM(T2-), and the output voltage T2(-) of the fourth transformer-rectifier device 14 is set by the feedback value of the voltage T2(-) and the signal PWM(T2-) that are input to the fourth control circuit 24.

In the high-voltage power supply 10 according to the first embodiment, the output from the output terminal 10B can be made to vary linearly from a negative voltage to a positive voltage. Also, it is possible to generate the voltage Vc(-) from the output terminal 10A and generate the voltage Vb(+/-) from the output terminal 10B with the first transformer-rectifier device 11. Thus, it is possible to reduce the cost of the high-voltage power supply unit. Further, in the high-voltage power supply 10, it is possible to generate the voltage Vb(+/-) from the output terminal 10B using the first transformer-rectifier device 11 including the single transformer. Therefore, overshooting/undershooting does not occur, and it is possible to avoid generation of a defective image (a horizontal stripe). In contrast thereto, in a case of using a plurality of transformers, difference may occur in the starting times and the stopping times among the plurality of transformers, which may result in occurrences of overshooting/undershooting.

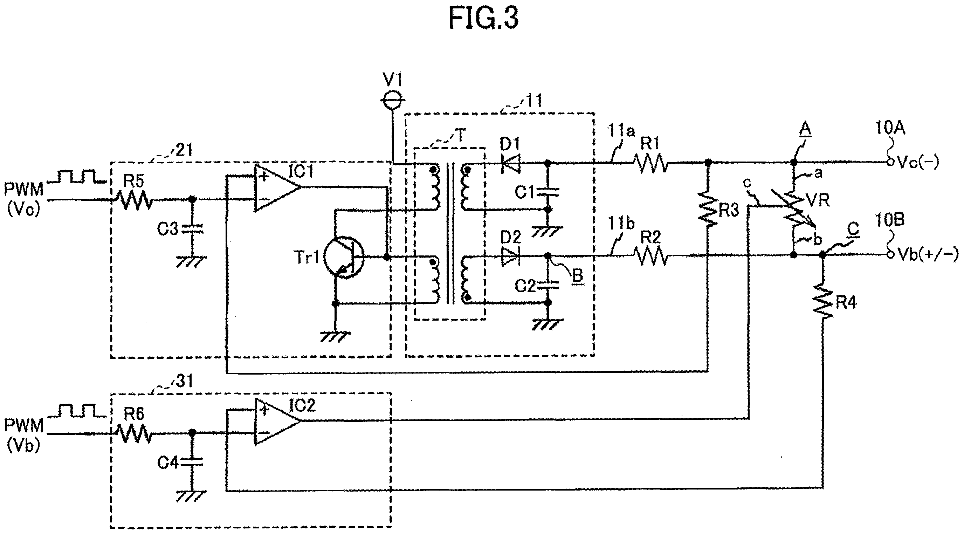

Next, the configuration of the first transformer-rectifier device 11 will be described in detail. FIG. 3 is a circuit diagram showing the first transformer-rectifier device 11 in the high-voltage power supply unit 10. The first transformer-rectifier device 11 includes the transformer T. The transformer T has a flyback configuration and includes two secondary wirings (a first secondary winding and a second secondary winding). The respective secondary windings have mutually different winding start positions and generate voltages in mutually opposite directions. The transformer T has thus two output terminals in mutually different polarities. To the respective output terminals of the transformer T, diodes D1 and D2 and capacitors C1 and C2 are connected as rectifying and smoothing circuits, respectively. Note that a first rectifying and smoothing circuit has the diode D1 and the capacitor C1 and a second rectifying and smoothing circuit has the diode D2 and the capacitor C2. Further, resistors R1 and R2 are connected in series with the diodes D1 and D2, respectively, and a resistor R3 is connected between the terminal of the resistor R1 at the output side and the first control circuit 21.

The first control circuit 21 includes an operational amplifier IC1, a resistor R5, a capacitor C3 and a power transistor Tr1. Further, the resistor control circuit 31 includes an operational amplifier IC2, a resistor R6 and a capacitor C4.

From the output terminal 10A, the negative voltage obtained from rectifying and smoothing the negative output of the transformer T is output as the voltage Vc(-). Further, the voltage Vc(-) from the output terminal 10A is set by the signal PWM(Vc) that is input to the first control circuit 21. The voltage obtained from smoothing the signal PWM(Vc) by the RC circuit (R5, C3) and the feedback voltage of the voltage Vc(-) are input to the operational amplifier IC1 so that these input voltages are controlled to be equal. The output of the operational amplifier IC1 is supplied to the base of the power transistor Tr1 and controls the current that flows through the power transistor Tr1 so as to control the output voltage to be applied to the primary winding of the transformer T.

The output voltage value Vb(+/-) from the output terminal 10B is set by the signal PWM(Vb) provided to the resistor control circuit 31. The voltage obtained from smoothing the signal PWM(Vb) by the RC circuit (R6, C4) and the feedback voltage of the voltage Vb(+/-) are input to the operational amplifier IC2 so that these voltages are controlled to be equal. The output of the operational amplifier IC2 is input to the variable resistor VR and controls the resistance value of the variable resistor VR. Note that the variable resistor VR will be described later. The variable resistor VR and the resistor R2 are connected in series and the value of the voltage Vb(+/-) is set by the ratio of the resistance value of the variable resistor VR and the resistance value of resistor R2. Therefore, it is possible to linearly control the output value Vb(+/-) from a negative voltage to a positive voltage by controlling the resistance value of the variable resistor VR.

Note that "VI" shown in FIG. 3 denotes a power source voltage (for example, 24 V). Further, the signals PWM(Vc) and PWM(Vb) are generated by a control IC (for example, a microcomputer or the like, not shown) in a previous stage and are changed depending on the desired output voltages Vc(-) and Vb(+/-). The setting values of the signals PWM(Vc) and PWM(Vb) are determined depending on an image density, a temperature change, a humidity change and/or the like.

Note that the circuit shown in FIG. 3 can be changed so that the voltage that is output from the output terminal 10A is a positive voltage (Vc(+)) and the voltage that is output from the output terminal 10B is a voltage (Vb(+/-)) obtained from adding the output voltage at the one output terminal 11a and the output voltage at the other output terminal 11b of the first transformer-rectifier device 11 together.

In this case, the directions of the two secondary windings and the rectifying directions in the diodes D1 and D2 are changed so that the voltage in the first polarity that is output from the first rectifying and smoothing circuit (D1, C1) becomes a positive voltage and the voltage in the second polarity that is output from the second rectifying and smoothing circuit (D2, C2) becomes a negative voltage. Further, the resistor R2 that is a fixed resistance part is connected to the output terminal 11b and the variable resistor VR is connected between the terminal at the output side (other terminal) of the resistor R2 and the output terminal 11 a. Then, the positive voltage (Vc(+)) that is output from the first rectifying and smoothing circuit is output from the first output terminal 10A and the voltage (Vb(+/-)) obtained from dividing the voltage difference between the respective outputs of the first rectifying and smoothing circuit and the second rectifying and smoothing circuit with the resistor R2 and the variable resistor VR that are connected in series is output from the second output terminal 10B.

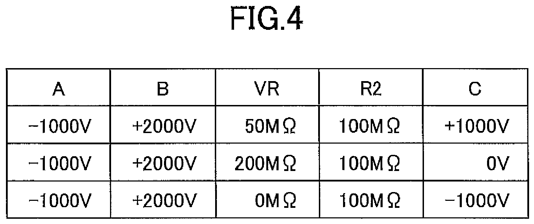

FIG. 4 is a table showing voltages at respective parts in the first transformer-rectifier device shown in FIG. 3. The table shows the voltage values at the points A, B and C. The respective values in the table include the resistance value of the variable resistor VR, the resistance value of the resistor R2 and the voltage Vb(+/-) that is set depending on the resistance value of the variable resistor VR and the resistance value of the resistor R2. "A" denotes the voltage Vc(-); "B" denotes the voltage obtained from rectifying and smoothing the positive output value of the transformer T; and "C" denotes the voltage Vb(+/-). The voltage difference between "A" and "B" is divided by the variable resistor VR and the resistor R2 and "C" is obtained. By changing the variable resistor VR, it is possible to change "C" that is the value of the output voltage Vb(+/-), from a positive value to a negative value, as shown in FIG. 4.

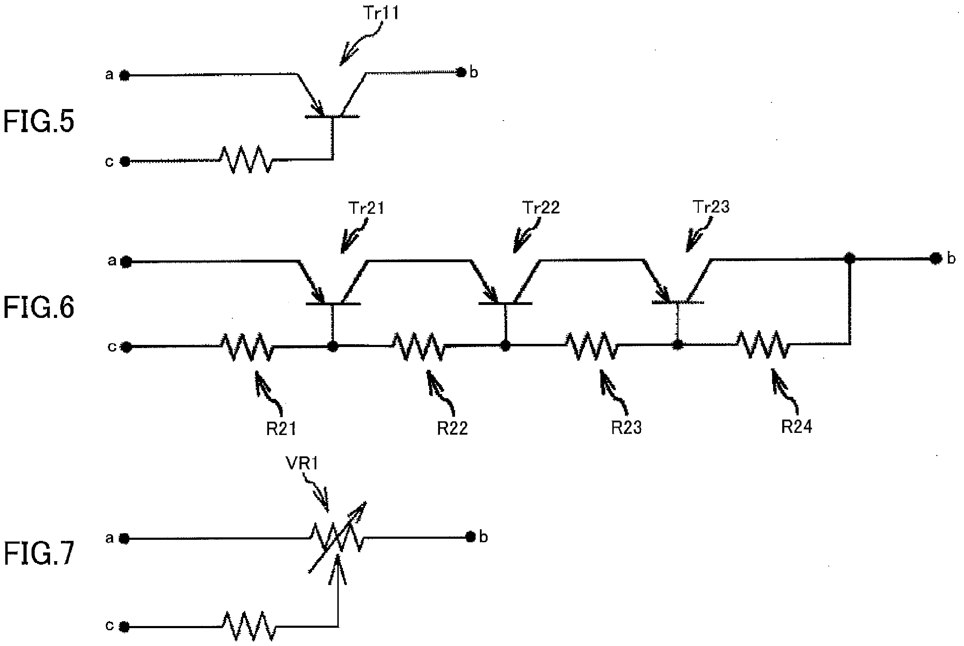

Next, a configuration of the variable resistor VR will be described. FIG. 5 shows a first example of the variable resistor in the high-voltage power supply unit according to the first embodiment. In this example, as the variable resistor VR, a single-stage transistor is used. Note that in FIG. 5, the terminals "a", "b" and "c" correspond to the terminals "a", "b" and "c" shown in FIG. 3, respectively. In this configuration, by changing the base current that is set by the setting value of the signal PWM(Vb), the emitter-collector current is changed and the apparent resistance value is changed.

FIG. 6 shows a second example of the variable resistor VR in the high-voltage power supply unit according to the first embodiment. In this example, the variable resistor VR includes a multistage transistor, i.e., three stages of transistors. The variable resistor VR includes the three transistors TR1, TR2 and TR3 and four resistors R21, R22, R23 and R24. Note that in FIG. 6, terminals "a", "b" and "c" correspond to the terminals "a", "b" and "c", shown in FIG. 3, respectively. Also in this configuration, by changing the base currents that are set by the setting value of the signal PWM(Vb), the emitter-collector currents are changed and the apparent resistance value is changed. In this example, the three transistors TR21, TR22 and TR23 are connected in series. Therefore, it is possible to reduce the withstand voltage of each transistor to one third. Thus, it is possible to control a higher voltage. In this example, it is possible to reduce the cost by using a multistage transistor having low withstood voltages in comparison to using a transistor having a high withstand voltage.

FIG. 7 shows a third example of the variable resistor VR in the high-voltage power supply unit according to the first embodiment. In this example, a volume resistor of a rotary type VR1 is used as the variable resistor VR. By driving the volume resistor using a motor (not shown), the resistance value is changed. Note that in FIG. 7, the terminals "a", "b" and "c" correspond to the terminals "a", "b" and "c", shown in FIG. 3, respectively. The motor is driven according to the setting value of the signal PWM(Vb).

According to the first embodiment described above, it is possible to provide a high-voltage power supply unit that generates a plurality of outputs using a single transformer as follows: That is, a first rectifying and smoothing circuit outputs a voltage in a first polarity, which is output from a first output terminal. A second rectifying and smoothing circuit outputs a voltage in a second polarity different from the first polarity, which is then divided by a fixed resistance part and a variable resistance part that are connected in series. The thus obtained voltage is then output from a second output terminal. Thus, it is possible to output a high voltage that can be changed linearly from a positive voltage to a negative voltage while overshooting/undershooting at a time of starting and/or stopping the use of the transformer is avoided.

### (Alternative example)

For the sake of convenience, a problem to be solved by the alternative example will be described first.

Note that, a developing roller carries out both collecting toner from a photoreceptor drum and supplying toner to the photoreceptor drum. Therefore, a high-voltage power supply unit needs to apply a positive voltage and a negative voltage to the developing roller. Further, it is preferable to apply the positive voltage and the negative voltage to the developing roller in a manner of rapidly switching the positive voltage and the negative voltage.

Further, it is preferable that the high-voltage power supply unit can apply voltages in mutually-opposite polarities to the developing roller and the supply roller simultaneously.

However, in the high-voltage power supply unit 130 in the related art shown in FIG. 14, the developing bias and the supply bias are set by any one of the PWM(+) signal Spwm+ and the PWM(-) signal Spwm-. Therefore, voltages having the same polarity are applied to the developing roller and the supply roller at any time.

Further, in the configuration of FIG. 14, the PWM(+) signal Spwm+ is used to control the positive voltage and the PWM(-) signal Spwm- is used to control the negative voltage. Therefore, when the voltage at the developing roller is to be switched from a positive voltage to a negative voltage, or from a negative voltage to a positive voltage, such switching in polarity can be implemented after a certain period of time has elapsed.

Furthermore, assuming a case where two transformers used to output respective voltages simultaneously, a difference may occur between the periods of time of generating the respective voltages in the transformers due to the individual difference between the two transformers. If so, it may be impossible to simultaneously output the respective voltages from terminals such as those 103a and 103c.

Furthermore, in order to supply a predetermined amount of toner from a supply roller to a developing roller, the voltage difference between a developing bias and a supply bias need to be maintained at a fixed value. In other words, it is preferable to apply stable voltages to the developing roller and the supply roller.

However, in the above-mentioned high-voltage power supply unit 130, in order to apply stable voltages to the developing roller and the supply roller, the PWM(+) signal Spwm+ (or the PWM(-) signal Spwm-) is to be controlled in such a manner that the voltage difference will be greater than or equal to (or less than equal to) the sum of the Zener voltages of the Zener diodes 137 and 138.

In the above-mentioned power supply unit discussed in Patent Reference No. 2, it is not possible to simultaneously turn on a first output port and a second output port that output signals to the respective power supply circuits. Therefore, it is not possible to simultaneously apply the voltages in mutually-opposite polarities to the developing roller and the supply roller. Further, in a case where the difference between the voltages applied to the developing roller and the supply roller is less than the Zener voltage, it may be impossible for a sufficient amount of the Zener current to flow and the voltage difference may be unstable.

The alternative example has been devised in consideration of these problems, and an objective of the alternative example is to provide a power supply unit that simultaneously outputs stable voltages in mutually-opposite polarities.

### (Configuration of High-Voltage Power Supply Unit)

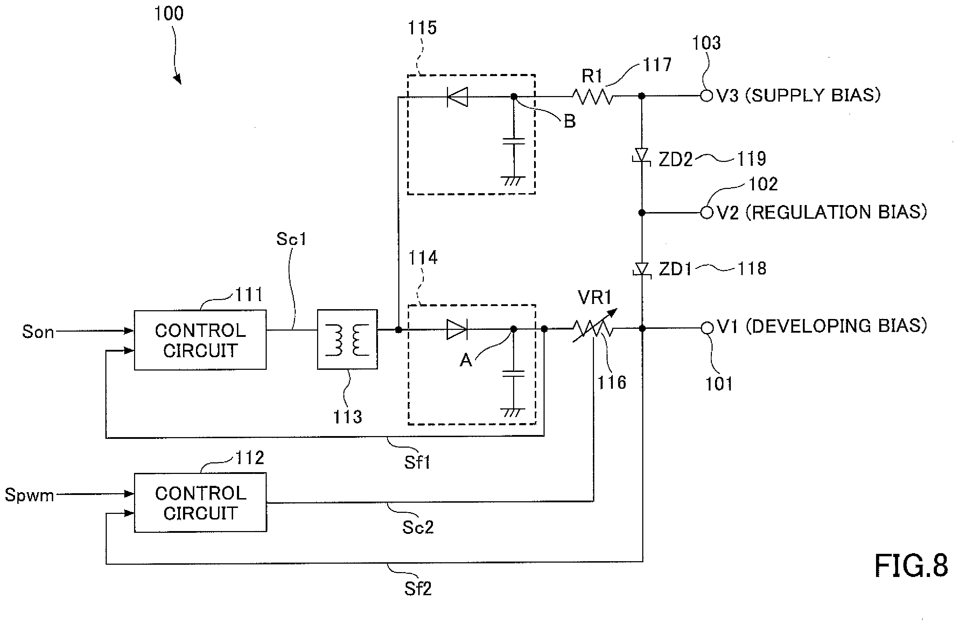

FIG. 8 shows one example of a configuration of a high-voltage power supply unit 100 according to the alternative example.

In the high-voltage power supply unit 100 according to the alternative example, an ON signal Son (input signal) is input to a control circuit 111 and a PWM signal Spwm (input signal) is input to a control circuit 112. From a terminal 101, a voltage V1 (output signal) is output. From a terminal 102, a voltage V2 (output signal) is output. From a terminal 103, a voltage V3 (output signal) is output.

The high-voltage power supply unit 100 includes the control circuit 111 (control part), the control circuit 112 (control part), a transformer 113, a rectifying and smoothing circuit 114, a rectifying and smoothing circuit 115, a variable resistance element 116, a current limiting resistor 117, a constant voltage element 118, a constant voltage element 119, the terminal 101 (second output terminal), the terminal 102 and the terminal 103 (first output terminal).

The rectifying and smoothing circuit 114 includes a terminal A. The rectifying and smoothing circuit 115 includes a terminal B.

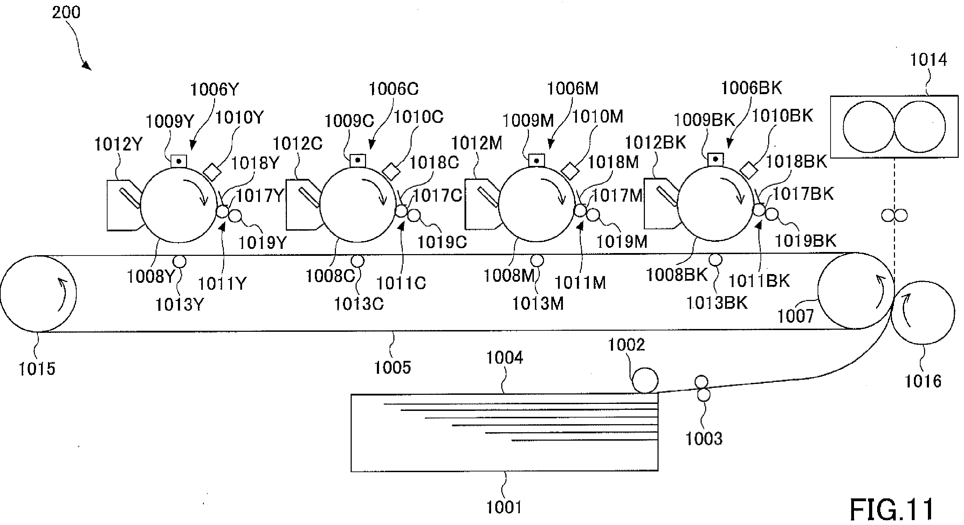

From the terminal 101, the voltage V1 is output as a developing bias. The developing bias is supplied to developing rollers (described later with FIG. 11). From the terminal 102, the voltage V2 is output as a regulation bias. From the terminal 103, the voltage V3 is output as a supply bias. The supply bias is supplied to supply rollers (described later with FIG. 11).

The ON signal Son is a signal for outputting only two output values of ON (1) and OFF (0). The ON signal Son controls high AC voltages to be output from the transformer 113. Therefore, by inputting the ON signal Son to the control circuit 111, it is possible to cause the transformer 113 to output a constant high AC voltage.

The PWM signal Spwm is a signal for outputting not only two output values of ON (1) and OFF (0) but also output a value between ON (1) and OFF (0). Therefore, as a result of the PWM signal Spwm being input to the control circuit 112, it is possible to finely tune the resistance of the variable resistance element 116. That is, it is possible to change the resistance of the variable resistance element 116 from a minimum resistance to a maximum resistance of the variable resistance element 116 .

The control circuit 111 controls the high AC voltage that is output from the transformer 113. That is, the control circuit 111 is electrically connected with the terminals A and B via the transformer 113 and the rectifying and smoothing circuits 114 and 115 and controls voltages to be supplied to the terminals A and B.

A voltage supplied to the terminal A is a positive voltage (constant voltage). A voltage supplied to the terminal B is a negative voltage (constant voltage).

Based on the ON signal Son and a feedback signal Sf1 of the terminal A, the control circuit 111 generates a control signal Sc1 for supplying voltages in mutually-opposite polarities to the terminal A and the terminal B and inputs the control signal Sc1 to the transformer 113.

Note that in the high-voltage power supply unit 100, voltages that have mutually-different polarities and equal magnitudes are supplied to the terminals A and B, respectively. However, the voltages supplied to the terminals A and B are not particularly limited thereto. As long as voltages having mutually-different polarities are supplied to the terminals A and B, the magnitudes thereof may be different from one another.

Based on the control signal Sc1 that is output from the control circuit 111, the transformer 113 generates the high AC voltage, and inputs the high AC voltage to the rectifying and smoothing circuits 114 and 115. Thus, based on the ON signal Son, the two voltages are generated with the single transformer 113, and the voltages are supplied to the two terminals (terminals A and B) simultaneously.

The rectifying and smoothing circuits 114 and 115 rectify and smooth the high AC voltage that is output from the transformer 113, supply the rectified and smoothed positive voltage to the terminal A and supply the rectified and smoothed negative voltage to the terminal B.

Note that in the high-voltage power supply unit 100, the single transformer 113 is used. However, the number of transformers is not limited to one. For example, the high-voltage power supply unit 100 may have two transformers. For example, a first transformer thereof may generate a high AC voltage, input the high AC voltage to the rectifying and smoothing circuit 114, and supply a positive voltage to the terminal A. A second transformer thereof may generate a high AC voltage, input the high AC voltage to the rectifying and smoothing circuit 115, and supply a negative voltage to the terminal B. In this case, it is preferable that the individual difference between the two transformers is small. In any case, what is necessary is to be able to control, based on the single ON signal Son, the voltages at the two terminals (the terminals A and B) simultaneously.

The control circuit 112 controls the resistance of the variable resistance element 116. The control circuit 112 thus changes the resistance of the variable resistance element 116 to control the voltage V1 that is output from the terminal 101.

Based on the PWM signal Spwm and the feedback signal Sf2 of the voltage V1 that is output from the terminal 101, the control circuit 112 generates the control signal to be used to change the resistance of the variable resistance element 116 and inputs the control signal Sc2 to the variable resistance element 116.

Based on the control signal Sc2 that is output from the control circuit 112, the variable resistance element 116 changes the resistance and changes the voltages V1 to be output from the terminal 101. That is, the voltage at the terminal A is lowered through the variable resistance element 116 and the voltage V1 is generated. The voltage V1 can thus be changed in a range from the voltage (positive voltage) supplied to the terminal A to the voltage (negative voltage) supplied to the terminal B.

The constant voltage element 118 provides a voltage drop from the voltage V1 that is output from the terminal 101 and generates the voltage V2 to be output from the terminal 102. The constant voltage element 119 provides a voltage drop from the voltage V2 that is output from the terminal 102 and generates the voltage V3 to be output from the terminal 103.

As the constant voltage elements 118 and 119, it is preferable to use, for example, Zener diodes.

It is preferable that the voltage difference between the respective voltages at the terminals A and B is greater than the sum of the Zener voltages of the constant voltage elements (Zener diodes) 118 and 119.

The current limiting resistor 117 provides a voltage drop for the voltage difference between the voltage V3 lowered from the voltage V1 by the Zener voltages and the voltage at the terminal B.

At the terminal B, a negative voltage controlled by the control circuit 111 is generated. At the terminal 103, the voltage lowered from the voltage V1 by the sum of the Zener voltages of the constant voltage elements 118 and 119 (Zener diodes) is generated. The current limiting resistor 117 is connected between the terminals B and 103 and provides a voltage drop for the voltage difference therebetween.

Thereby, it is possible to stabilize the current that flows through the constant voltage elements 118 and 119, i.e., the current that flows between the terminals 101 and 103.

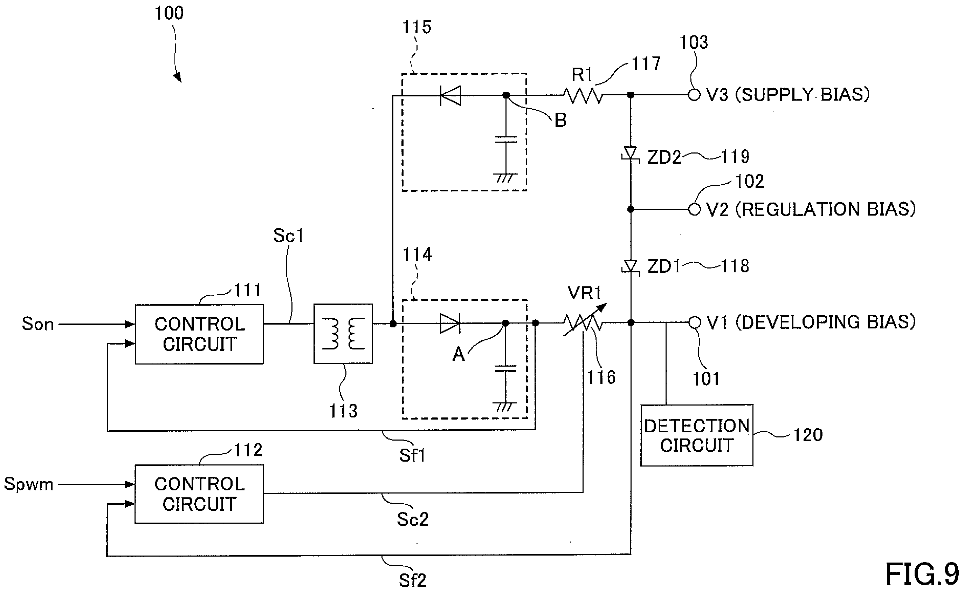

Note that the high-voltage power supply unit 100 can include a detection circuit 120 for detecting the voltage V1 that is output from the terminal 101, as shown in FIG. 9.

In the high-voltage power supply unit 100 according to the alternative example, it is possible to supply voltages in mutually-opposite polarities to the terminals A and B simultaneously. Therefore, it is possible to output voltages in mutually-opposite polarities from the terminal 101 (second output terminal) and the terminal 103 (first output terminal) simultaneously. Further, it is possible to set the voltage V1 that is output from the terminal 101 changeable in a range between the respective voltages at the terminals A and B.

Further, in the high-voltage power supply unit 100 according to the alternative example, the control circuit 111 performs control such that the voltage difference between the respective voltages at the terminals A and B will be greater than the sum of the Zener voltages of the constant voltage elements 118 and 119 (Zener diodes). By stabilizing the Zener voltages by positively supplying the Zener currents to the Zener diodes, it is possible to cause the terminals 101 and 103 (first and second output terminals) to output stable voltages.

Thereby, it is possible to implement the high-voltage power supply unit 100 that simultaneously outputs stable voltages in mutually different polarities or the same polarity.

### (Configuration of High-Voltage Power Supply Unit)

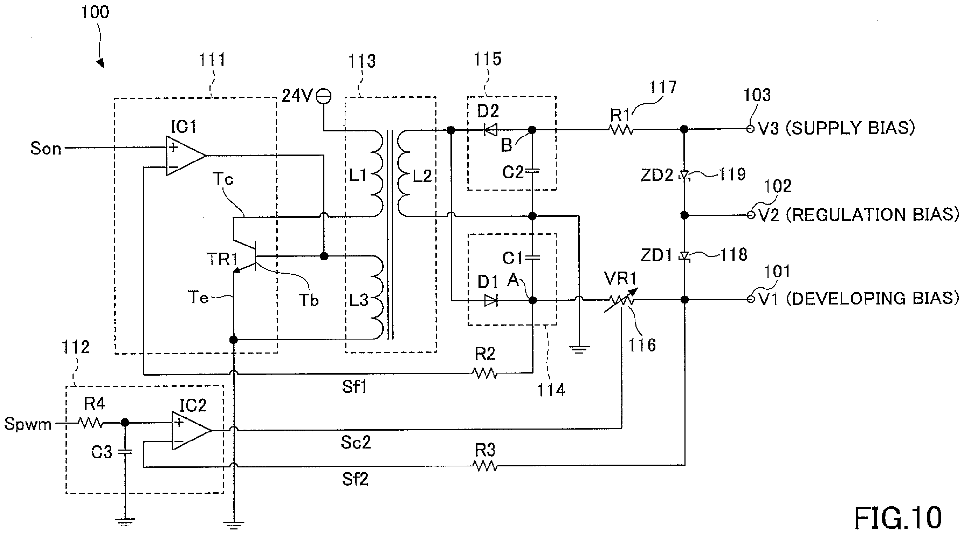

FIG. 10 shows one example of a specific circuit configuration of the high-voltage power supply unit 100 according to the alternative example Note that the same reference numerals are given to parts identical to those in FIG. 8.

The high-voltage power supply unit 100 includes the control circuit 111, the control circuit 112, the transformer 113, the rectifying and smoothing circuit 114, the rectifying and smoothing circuit 115, the variable resistance element 116, the current limiting resistor 117, the Zener diode 118, the Zener diode 119, the terminal 101 (the second output terminal), the terminal 102 and the terminal 103 (first output terminals).

The control circuit 111 includes an operational amplifier IC1 and a transistor TR1.

To the operational amplifier IC1, the ON signal Son and the feedback signal Sf1 of the voltage lowered from the voltage at the terminal A by a resistor R2 are input. The operational amplifier IC1 controls its output signal in such a manner that the ON signal Son and the feedback signal Sf1 will be coincident and inputs the output signal to the base Tb of the transistor TR1 and one terminal of a primary winding L3 of the transformer 113.

The collector Tc of the transistor TR1 is electrically connected with the one terminal of a primary winding L1 of the transformer 113. The emitter Te of the transistor TR1 and the other terminal of the primary winding L3 of the transformer 113 are electrically connected with a ground GND. The other terminal of the primary winding L1 of the transformer 113 is electrically connected to a power source (for example, 24 V).

The transistor TR1 controls the current that flows through the transistor TR1 itself based on the output signal of the operational amplifier IC1 that is input to the base Tb.

Based on the control signal that is output from the control circuit 111 that includes the operational amplifier IC1 and the transistor TR1, the respective voltages at the terminals A and B are controlled. The voltages supplied to these two terminals A and B are controlled based on the ON signal Son.

The transformer 113 includes the primary winding L1, a secondary winding L2 and the primary winding L3. The transformer 113 transforms the voltage of the control signal that is output from the control circuit 111, generates a high AC voltage and inputs the high AC voltage to the rectifying and smoothing circuits 114 and 115 that include capacitors C1 and C2 and diodes D1 and D2. Based on the control signal, the transformer 113 generates the voltage to be supplied to the two terminals (terminals A and B).

The rectifying and smoothing circuit 114 includes the terminal A, the capacitor C1 and the diode D1. The rectifying and smoothing circuit 115 includes the terminal B, the capacitor C2 and the diode D2. The rectifying and smoothing circuits 114 and 115 rectify and smooth the high AC voltage generated at the secondary winding L2 of the transformer 113. The thus rectified and smoothed positive-polarity high voltage (constant voltage) is applied to the terminal A, and the thus rectified and smoothed negative-polarity high voltage (constant voltage) is applied to the terminal B.

Note that specific configurations of the rectifying and smoothing circuits 114 and 115 are not particularly limited.

The control circuit 112 includes the operational amplifier IC2, a capacitor C3 and a resistor R4.

To the operational amplifier IC2, the PWM signal Spwm and the feedback signal Sf2 of the voltage lowered from the voltage V1 that is output from the terminal 101 by a resistor R3 are input. The PWM signal Spwm is rectified and smoothed by the capacitor C3 and the resistor R4. The operational amplifier IC2 carries out control such as to cause the PWM signal Spwm and the feedback signal Sf2 to be coincident and inputs the control signal Sc2 to the variable resistance element 116. The control circuit 112 thus controls the resistance of the variable resistance element 116.

Based on the control signal Sc2 that is output from the control circuit 112, the variable resistance element 116 changes its resistance. The variable resistance element 116 provides a voltage drop from the voltage at the terminal A through its resistance and generates the voltage V1 to be output from the terminal 101. Therefore, the variable resistance element 116 can control the voltage V1 that is output from the terminal 101.

The voltage V1 that is output from the terminal 101 can be changed by the variable resistance element 116 in a range between the respective voltages supplied to the terminals A and B. Therefore, the high-voltage power supply unit 100 can output a positive voltage from the terminal 101 and a negative voltage from the terminal 103 simultaneously. Further, it is also possible to simultaneously output a negative voltage from the terminal 101 and a negative voltage from the terminal 103.

The Zener diode 118 provides a voltage drop from the voltage V1 that is output from the terminal 101 and outputs the thus obtained voltage as the voltage V2 from the terminal 102.

The Zener diode 119 provides a voltage drop from the voltage V2 that is output from the terminal 102 and outputs the thus obtained voltage as the voltage V3 from the terminal 103.

The current limiting resistor 117 provides a voltage drop for the difference between the voltage V3 that is output from the terminal 103 and the voltage at the terminal B.

As the constant voltage elements 118 and 119, it is preferable to use Zener diodes.

The voltage difference between the respective voltages at the terminals A and B is greater than the sum of the Zener voltages of the respective Zener diodes 118 and 119.

Zener diodes are elements that can provide very stable voltages. Therefore, it is possible to output stable voltages at the terminals A and B by thus employing the Zener diodes 118 and 119 in the high-voltage power supply unit 100 and maintaining the voltage difference between the terminals A and B greater than the sum of the Zener voltages of the Zener diodes 118 and 119.

### (Configuration of Image Forming Section in Image Forming Apparatus)

A color tandem image forming apparatus will now be described. Using FIG. 11, an image forming section 200 in an image forming apparatus will be described in detail. It is possible to employ the high-voltage power supply unit 100 according to the alternative example in the image forming section 200 in the image forming apparatus.

In FIG. 11, the color tandem image forming apparatus that forms BK, M, C and Y images will be described. However, an image forming apparatus in which the high-voltage power supply unit 100 can be employed is not limited to one of this type. The high-voltage power supply unit 100 according to the alternative example can be employed also in a monochrome image forming apparatus that forms only a BK image.

Note that in FIG. 11, BK denotes black, M denotes magenta, C denotes cyan and Y denotes yellow. Therefore, to parts/components having the same configurations, the same numerals are given, and, are followed by BK, M, C and Y to distinguish among those for the respective colors.

The image forming section 200 in the image forming apparatus includes a paper feeding tray 1001, a paper feeding roller 1002, a separation roller 1003, sheets of paper 1004, a primary transfer belt 1005, image forming parts 1006Y, 1006C, 1006M and 1006BK, a driving roller 1007, primary transfer rollers 1013Y, 1013C, 1013M and 1013BK, a fixing device 1014, a driven roller 1015, a secondary transfer roller 1016 and so forth.

As shown in FIG. 11, along the primary transfer belt 1005, the image forming parts 1006Y, 1006C, 1006M and 1006BK of the respective colors are arranged. In the stated order from the upstream side to the downstream side, the image forming parts 1006BK, 1006M, 1006C and 1006Y are arranged.

In the paper feeding tray 1001, the sheets of paper 1004 are provided.

The paper feeding roller 1002 and the separation roller 1003 separate and feed the sheets of paper 1004 that are thus taken out, sheet by sheet, from the paper feeding tray 1001.

On the primary transfer belt 1005, a full color toner image is formed, as will be described now.

The driving roller 1007 and the driven roller 1015 are driven to rotate counterclockwise and move the primary transfer belt 1005 to rotate counterclockwise. The driving roller 1007 is driven to rotate by a driving motor (not shown). Along with the rotation of the driving roller 1007, the driven roller 1015 is driven to rotate accordingly. As a result of the driving roller 1007 and the driven roller 1015 being driven to rotate, the primary transfer belt 1005 is thus moved.

The primary transfer rollers 1013BK, 1013M, 1013C and 1013Y transfer toner images of the respective colors BK, M, C and Y first formed on photoreceptor drums 1008BK, 1008M, 1008C and 1008Y onto the primary transfer belt 1005 using a bias applied to the primary transfer rollers 1013BK, 1013M, 1013C and 1013Y at respective positions at which the primary transfer belt 1005 comes into contact with the respective photoreceptor drums 1008BK, 1008M, 1008C and 1008Y.

The secondary transfer roller 1016 transfers a full color toner image thus formed on the primary transfer belt 1005 onto the sheet of paper 1004 at a position at which the primary transfer belt 1005 comes into contact with the sheet of paper 4 with a bias applied to the secondary transfer roller 1016.

The fixing device 1014 fixes the full color toner image thus transferred onto the sheet of paper 1004.

The image forming parts 1006Y, 1006C, 1006M and 1006BK include the photoreceptor drums 1008Y, 1008C, 1008M and 1008BK, electrification devices, LED heads 1010Y, 1010C, 1010M and 1010BK, developing devices 1011Y, 1011C, 1011M and 1011BK and electricity removal devices 1012Y, 1012C, 1012M and 1012BK, respectively. The developing devices 1011Y, 1011C, 1011M and 1011BK include developing rollers 1017Y, 1017C, 1017M and 1017BK, regulation blades 1018Y, 1018C, 1018M and 1018BK and supply rollers 1019Y, 1019C, 1019M and 1019BK, respectively.

The respective image forming parts 1006BK, 1006M, 1006C and 1006Y have identical configurations except that the colors of toner images to be formed therein are different thereamong. The image forming part 1006BK forms an image of black, the image forming part 1006M forms an image of magenta, the image forming part 1006C forms an image of cyan and the image forming part 1006Y forms an image of yellow.

Around the outer circumferential surfaces of the photoreceptor drums 1008BK, 1008M, 1008C and 1008Y, the electrification devices 1009BK 1009M, 1009C and 1009Y, the LED heads 1010BK, 1010M, 1010C and 1010Y, the developing devices 1011BK, 1011M, 1011C and 1011Y, photoreceptor cleaners (not shown), the electricity removal devices 1012BK, 1012M, 1012C and 1012Y and so forth are provided.

The developing devices 1011BK, 1011M, 1011C and 1011Y form respective toner images on the photoreceptor drums 1008BK, 1008M, 1008C and 1008Y and thus visualize electrostatic latent images, respectively. By the high-voltage power supply unit 100 according to the second embodiment, the developing bias is supplied to the developing rollers 1017BK, 1017M, 1017C and 1017Y, the regulation bias is supplied to the regulation blades 1018BK, 1018M, 1018C and 1018Y and the supply bias is supplied to the supply rollers 1019BK, 1019M, 1019C and 1019Y.

The supply rollers 1019BK, 1019M, 1019C and 1019Y supply toners to the developing rollers 1017BK, 1017M, 1017C and 1017Y, respectively.

The regulation blades 1018BK, 1018M, 1018C and 1018Y form thin layers of the toners supplied to the developing rollers 1017BK, 1017M, 1017C and 1017Y, respectively.

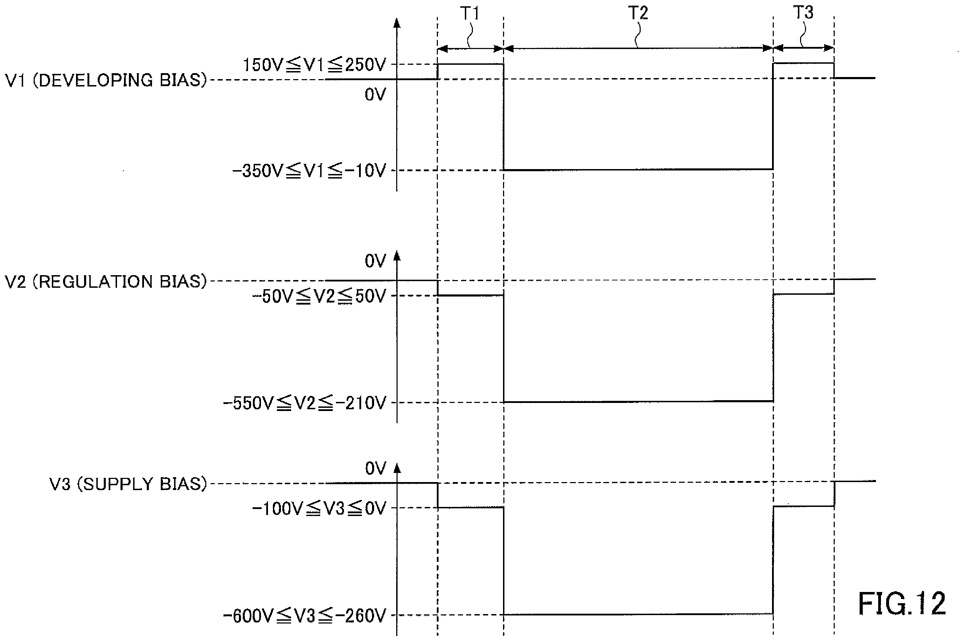

The developing rollers 1017BK, 1017M, 1017C and 1017Y supply the thin layers of the toners onto the photoreceptor drums 1008BK, 1008M, 1008C and 1008Y, respectively. Thus, the toner images are formed on the electrostatic latent images previously formed on the respective photoreceptor drums 1008BK, 1008M, 1008C and 1008Y. At this time, it is preferable to apply a negative voltage to the developing rollers 1017BK, 1017M, 1017C and 1017Y and a negative voltage to the supply rollers 1019BK, 1019M, 1019C and 1019Y (see FIG. 12 that will be described later). Further, the developing rollers 1017BK, 1017M, 1017C and 1017Y collect residual toners from the photoreceptor drums 1008BK, 1008M, 1008C and 1008Y and clean the photoreceptor drums 1008BK, 1008M, 1008C and 1008Y. At this time, it is preferable to apply a positive voltage to the developing rollers 1017BK, 1017M, 1017C and 1017Y and a negative voltage to the supply rollers 1019BK, 1019M, 1019C and 1019Y (see FIG. 12).

The electrification devices 1009BK, 1009M, 1009C and 1009Y electrify the outer circumferential surfaces of the photoreceptor drums 1008BK, 1008M, 1008C and 1008Y, respectively.

The LED heads 1010BK, 1010M, 1010C and 1010Y emit light of the respective colors corresponding to those of images that the image forming parts 1006BK, 1006M, 1006C and 1006Y form, respectively. In order to obtain images with high precision, it is preferable that the respective distances between LED heads 1010BK, 1010M, 1010C and 1010Y and the photoreceptor drums 1008BK, 1008M, 1008C and 1008Y are fixed.

The electricity removal devices 1012BK, 1012M, 1012C and 1012Y remove electricity from the electrified outer circumferential surfaces of the photoreceptor drums 1008BK, 1008M, 1008C and 1008Y.

The photoreceptor cleaners wipe off (scrape off) the useless residual toners from the outer circumferential surfaces of photoreceptor drums 1008BK, 1008M, 1008C and 1008Y.

### (Operations in Image Forming Section of Image Forming Apparatus)

Next, operations in the image forming section 200 in the image forming apparatus at a time of forming an image will be described.

First, operations in the image forming part 1006BK will be described in detail. As to the other image forming parts 1006M, 1006C and 1006Y, although descriptions will be partially omitted, the same operations as those in the image forming part 1006BK are carried out except that the colors of toner images are different.

The outer circumferential surface of the photoreceptor drum 1008BK is uniformly electrified by the electrification device 1009BK in a dark place. Thereafter, exposure is carried out by light corresponding to an image of black to be formed by the LED head 1010BK, and thus, an electrostatic latent image is formed (i.e., on the photoreceptor drum 1008BK, electrostatic charge is distributed to form an image). The electrostatic latent image cannot be viewed by the human eye.

Next, the supply roller 1019BK supplies a black toner to the developing roller 1017BK.

The regulation blade 1018BK forms a thin layer of the toner thus supplied onto the developing roller 1017BK.

The developing roller 1017BK supplies the thin layer of toner onto the photoreceptor drum 1008BK (for example, a black toner electrified in a negative polarity). By causing the black toner to move to the electrostatic latent image on the photoreceptor drum 1008BK, a toner image of black is formed on the photoreceptor drum 1008BK. Thus, the electrostatic latent image is visualized with the black toner supplied by the developing roller 1017BK.

At this time, it is preferable that biases, for example, in the same polarity are supplied to the developing roller 1017BK and the supply roller 1019BK simultaneously. By employing the high-voltage power supply unit 100 according to the second embodiment in the image forming part 1006BK, it is possible to supply, to the developing roller 1017BK, the developing bias in negative polarity (for example, equal to or higher than -350 V and equal to or lower than -10 V) and, to the supply roller 1019BK, the supply bias in a negative polarity (for example, equal to or higher than -600 V and equal to or lower than -260 V) simultaneously. Note that it is possible to supply, also to the regulation blade 1018BK, the regulation bias in negative polarity (for example, equal to or higher than -550 V and equal to or lower than -210 V) (see FIG. 12).

Next, the primary transfer roller 1013BK transfers the toner image in black from the photoreceptor drum 1008BK onto the primary transfer belt 1005 at a position at which the primary transfer belt 1005 comes into contact into the photoreceptor drum 1008BK with a bias applied to the primary transfer roller 1013.

The useless black toner (for example, the black toner electrified in negative polarity) remaining on the photoreceptor drum 1008BK from which transfer of the toner image has been finished is collected by the developing roller 1017BK. Further, waste toner is wiped off by the photoreceptor cleaner or the like and thus the photoreceptor drum 1008BK is cleaned. Note that the waste toner is put into a waste toner container (not shown) or the like.

At this time, it is preferable to supply biases, for example, in mutually-opposite polarities to the developing roller 1017BK and the supply roller 1019BK simultaneously. By employing the high-voltage power supply unit 100 according to the alternative example for the image forming part 1006BK, it is possible to supply, to the developing roller 1017BK, the developing bias in positive polarity (for example, equal to or higher than 150 V and equal to or lower than 250 V) and, to the supply roller 1019BK, a supply bias in negative polarity (for example, equal to or higher than -100 V and equal to or lower than 0 V), simultaneously. Note that it is also possible to supply, to the regulation blade 1018BK, a regulation bias in positive polarity or negative polarity (for example, equal to or higher than -50 V and equal to or lower than 50 V), simultaneously (see FIG. 12).

Thereafter, electricity is removed from the outer circumferential surface of the photoreceptor drum 1008BK by the electricity removal device 1012BK.

The image forming part 1006BK then waits for a subsequent image formation process.

Using FIG. 12, one example of biases applied to the developing devices 1011BK, 1011M, 1011C and 1011Y at a time of starting printing, at a time of printing and at a time of stopping printing will now be described.

As shown in FIG. 12, a period of time T1 denotes a printing starting period of time, a period of time T2 denotes a printing period of time, and a period of time T3 denotes a printing stopping period of time.

In FIG. 12, V1 denotes the developing bias, V2 denotes the regulation bias and V3 denotes the supply bias.

In each of the periods of time, the biases applied to the developing devices 1011BK, 1011M, 1011C and 1011Y are different.

For example, in the period of time T1, the voltage V1 is higher than or equal to 150 V and lower than or equal to 250 V; and the voltage V3 is higher than or equal to -100 and lower than or equal to 0 V. In the period of time T3, the voltage V1 is higher than or equal to 150 V and lower than or equal to 250 V; and the voltage V3 is higher than or equal to -100 and lower than or equal to 0 V. Thus, in the periods of time T1 and T3, to the developing rollers 1017BK, 1017M, 1017C and 1017Y and the supply rollers 1019BK, 1019M, 1019C and 1019Y, the biases in mutually-opposite polarities are applied.

For example, in the period of time T2, the voltage V1 is higher than or equal to -350 V and lower than or equal to -10 V; and the voltage V3 is higher than or equal to -600 and lower than or equal to -260 V. Thus, in the period of time T2, to the developing rollers 1017BK, 1017M, 1017C and 1017Y and the supply rollers 1019BK, 1019M, 1019C and 1019Y, the biases in the same polarity are applied.

Further, focusing on only the voltage VI, in the period of time T1, the voltage V1 is higher than or equal to 150 V and lower than or equal to 250 V; in the period of time T2, the voltage V1 is higher than or equal to -350 V and lower than or equal to -10 V; and, in the period of time T3, the voltage V1 is higher than or equal to 150 V and lower than or equal to 250 V. Thus, the positive voltage and the negative voltage are switched therebetween, from the positive polarity to the negative polarity, and from the negative polarity to the positive polarity.

FIG. 12 shows one example. Thus, by employing the high-voltage power supply unit 100 according to the alternative example, it is possible to apply the above-described biases to the developing devices 1011BK, 1011M, 1011C and 1011Y.

Thereafter, in order to further form toner images on the upstream side onto the primary transfer belt 1005, the position on the primary transfer belt 1005 at which the toner image of black has thus been formed is moved to the next image forming part 1006M. At the image forming part 1006M, a toner image of magenta is formed on the photoreceptor drum 1008M through the same operations as those at the time of forming the toner image of black in the image forming part 1006BK. The toner image of magenta is then transferred onto the toner image of black already formed on the primary transfer belt 1005 in a superposing manner.

In order to further form toner images on the upstream side onto the primary transfer belt 1005, the position on the primary transfer belt 1005 at which the toner images of black and magenta have been formed in the superposing manner is moved to the next image forming parts 1006C and 1006Y, in sequence. At the image forming parts 1006C and 1006Y, a toner image of cyan is formed on the photoreceptor drum 1008C in the same operations and then a toner image of yellow is formed on the photoreceptor drum 1008Y in the same operations. The toner images of cyan and yellow are then transferred onto the toner images of black and magenta already formed on the primary transfer belt 1005 in a superposing manner in sequence.

Thus, on the primary transfer belt 1005, a full color toner image is formed.

The sheet of paper 1004 to be taken out from the paper feeding tray 1001 is separated and fed by the feeding roller 1002 and the separation roller 1003.

The secondary transfer roller 1016 transfers the full color toner image from the primary transfer belt 1005 onto the sheet of paper 1004 at the position at which the primary transfer belt 1005 and the sheet of paper 1004 come into contact with one another with the bias applied to the secondary transfer roller 1016.

The fixing device 1014 fixes the full color toner image thus transferred onto the sheet of paper 1004.

Thereafter, the sheet of paper 1004 is ejected to the outside of the image forming apparatus.

Note that, to the electrification devices 1009Y, 1009C, 1009M and 1009BK, the developing devices 1011BK, 1011M, 1011C and 1011Y, the primary transfer rollers 1013BK, 1013M, 1013C and 1013Y and the secondary transfer roller 1016, the high-voltage power supply unit 100 and a similar high-voltage power supply unit(s) supply the respective biases.

Note that, using FIG. 11, the example has been described in which, in the image forming apparatus in an intermediate transfer method, the high-voltage power supply unit 100 according to the alternative example is employed. However, an image forming apparatus in which the alternative example can be employed is not limited to this transfer method. For example, it is also possible to employ the high-voltage power supply unit 100 according to the alternative example in an image forming apparatus in a direct transfer method.

By thus applying the high-voltage power supply unit 100 according to the alternative example to the image forming apparatus, it is possible to apply the biases (voltages) in mutually-opposite polarities to the developing rollers 1017BK, 1017M, 1017C and 1017Y and the supply rollers 1019BK, 1019M, 1019C and 1019Y simultaneously. Therefore, a printing sequence in the image forming apparatus is not limited to a print sequence of applying only positive biases or only negative biases to the developing rollers 1017BK, 1017M, 1017C and 1017Y and the supply rollers 1019BK, 1019M, 1019C and 1019Y. Further, to the image forming apparatus, the high-voltage power supply unit 100 supplies stable biases at any time.

The power supply units and the image forming apparatuses have been described in the embodiments. However, the present invention is not limited to the specifically disclosed embodiments, and variations and modifications may be made without departing from the scope of the present invention.

The present application is based on and claims the benefit of priority of Japanese Priority Application No. 2013-031857, dated February 21, 2013, and Japanese Priority Application No. 2013-050871, dated March 13, 2013.

## Claims

1. A circuit in a power supply unit, comprising:
a first output terminal (10A) that outputs a voltage in a first polarity (Vc(-)) compared to ground;
a second output terminal (10B) that outputs a voltage (Vb(+/-)) changeable between a voltage in the first polarity and a voltage in a second polarity, compared to ground, different from the first polarity; **characterized by**
a transformer (T) having primary winding, a first secondary winding and a second secondary winding;
a first rectifying and smoothing circuit (D1, C1) that rectifies and smoothes an output of the first secondary winding and outputs a voltage in the first polarity to the first output terminal (10A);
a second rectifying and smoothing circuit (D2, C2) that rectifies and smoothes an output of the second secondary winding and outputs a voltage in the second polarity;
first control means (21) to which a PWM input signal is applied, the first control means including an operational amplifier (IC1), a power transistor (Tr1) and an RC circuit comprising a resistor (R5) and a capacitor (C3) and ;
second output control means for controlling the voltage (Vb(+/-)) that is output from the second output terminal, the second output control means including a series circuit of a fixed resistance part (R2) and a variable resistance part (VR) connected in series, wherein one terminal of the fixed resistance part (R2) is connected with an output terminal (11b) of the second rectifying and smoothing circuit (D2, C2) and the other terminal is connected to the second output terminal (10B) and wherein one terminal of the variable resistance part (VR) is connected to the first output terminal and the other terminal of the variable resistance part is connected to the second output terminal; and
a control part (31) that outputs a control signal for changing a resistance value of the variable resistance part (VR); wherein
the PWM input signal is smoothed by the RC circuit (R5, C3) and a feedback voltage of the voltage at the first output terminal (10A) are input to the operational amplifier (IC1) and the output of the operational amplifier (IC1) is supplied to the base of the power transistor (Tr1) and controls the current that flows through the power transistor (Tr1) so as to control the output voltage to be applied to the primary winding of the transformer (T).

2. The circuit as claimed in claim 1, wherein
the variable resistance part (VR) includes a single-stage transistor (Tr11).

3. The circuit as claimed in claim 1, wherein
the variable resistance part (VR) includes a multistage transistor (Tr21, Tr22, Tr23).

4. An image forming apparatus (40) comprising:
a power supply unit comprising a circuit as claimed in any of claims 1 to 3; and
a processing part that uses, as biases, the DC voltages supplied by the power supply unit.

## Patentansprüche

1. Stromkreis in einer Netzteileinheit, umfassend:
eine erste Ausgangsklemme (10A), die eine Spannung in einer ersten Polarität (Vc(-)) im Vergleich zu Masse ausgibt;
eine zweite Ausgangsklemme (10B), die eine Spannung (Vb(+/-)) ausgibt, die zwischen einer Spannung in der ersten Polarität und einer Spannung in einer zweiten Polarität im Vergleich zu Masse verändert werden kann, die anders als die erste Polarität ist; **gekennzeichnet durch**
einen Transformator (T), der eine Primärwicklung, eine erste Sekundärwicklung und eine zweite Sekundärwicklung hat;
einen ersten Gleichrichter- und Glättungskreis (D1, C1), der eine Ausgabe der ersten Sekundärwicklung gleichrichtet und glättet und eine Spannung in der ersten Polarität an die erste Ausgangsklemme (10A) ausgibt;
einen zweiten Gleichrichter- und Glättungskreis (D2, C2), der eine Ausgabe der zweiten Sekundärwicklung gleichrichtet und glättet und eine Spannung in der zweiten Polarität ausgibt;
erste Steuermittel (21), auf die ein PWM-Eingangssignal angewendet wird, wobei die ersten Steuermittel einen Operationsverstärker (IC1), einen Leistungstransistor (Tr1) und einen RC-Stromkreis, umfassend einen Widerstand (R5) und einen Kondensator (C3), beinhalten und;
zweite Ausgabesteuermittel zum Steuern der Spannung (Vb(+/-)), die von der zweiten Ausgangsklemme ausgegeben wird, wobei die zweiten Ausgabesteuermittel eine Reihenschaltung eines festen Widerstandsteils (R2) und eines variablen Widerstandsteils (VR), die in Reihe geschaltet sind, beinhalten, wobei eine Klemme des festen Widerstandsteils (R2) mit einer Ausgangsklemme (11b) des zweiten Gleichrichter- und Glättungskreises (D2, C2) verbunden ist und die andere Klemme mit der zweiten Ausgangsklemme (10B) verbunden ist, und wobei eine Klemme des variablen Widerstandsteils (VR) mit der ersten Ausgangsklemme verbunden ist und die andere Klemme des variablen Widerstandsteils mit der zweiten Ausgangsklemme verbunden ist; und
einen Steuerteil (31), der ein Steuersignal zum Verändern eines Widerstandswerts des variablen Widerstandsteils (VR) ausgibt; wobei
das PWM-Eingangssignal durch den RC-Stromkreis (R5, C3) geglättet ist und eine Rückkopplungsspannung der Spannung an der ersten Ausgangsklemme (10A) zu dem Operationsverstärker (IC1) eingegeben werden und die Ausgabe des Operationsverstärkers (IC1) der Basis des Leistungstransistors (Tr1) zugeführt wird und den Strom steuert, der durch den Leistungstransistor (Tr1) fließt, um die Ausgangsspannung zu steuern, die auf die Primärwicklung des Transformators (T) angelegt werden soll.

2. Stromkreis nach Anspruch 1, wobei
der variable Widerstandsteil (VR) einen einstufigen Transistor (Tr11) beinhaltet.

3. Stromkreis nach Anspruch 1, wobei
der variable Widerstandsteil (VR) einen mehrstufigen Transistor (Tr21, Tr22, Tr23) beinhaltet.

4. Bilderzeugungsvorrichtung (40), umfassend:
eine Netzteileinheit, umfassend einen Stromkreis nach einem der Ansprüche 1 bis 3; und
einen Verarbeitungsteil, der die Gleichspannungen, die durch die Stromversorgungseinheit zugeführt werden, als Vorspannungen verwendet.

## Revendications

1. Circuit dans une unité de source d'alimentation, comprenant :
une première borne de sortie (10A) qui émet une tension dans une première polarité (Vc(-)) par rapport à la terre ;
une deuxième borne de sortie (10B) qui émet une tension (Vb(+/-)) pouvant être modifiée entre une tension dans la première polarité et une tension dans une deuxième polarité, par rapport à la terre, différente de la première polarité ; **caractérisé par**
un transformateur (T) comportant un enroulement primaire, un premier enroulement secondaire et un deuxième enroulement secondaire ;
un premier circuit de redressement et de lissage (D1, C1) qui redresse et lisse une sortie du premier enroulement secondaire et émet une tension dans la première polarité vers la première borne de sortie (10A) ;
un deuxième circuit de redressement et de lissage (D2, C2) qui redresse et lisse une émission du deuxième enroulement secondaire et émet une tension dans la deuxième polarité
un premier moyen de commande (21) auquel un signal d'entrée de PWM est appliqué, le premier moyen de commande comprenant un amplificateur opérationnel (IC1), un transistor de puissance (Tr1) et un circuit RC comprenant une résistance (R5) et un condensateur (C3) et ;
un deuxième moyen de commande de sortie destiné à commander la tension (Vb(+/- )) qui est émise depuis la deuxième borne de sortie, le deuxième moyen de commande de sortie comprenant un circuit en série d'une partie de résistance fixe (R2) et d'une partie de résistance variable (VR) connectées en série, une borne de la partie de résistance fixe (R2) étant connectée à une borne de sortie (11b) du deuxième circuit de redressement et de lissage (D2, C2) et l'autre borne étant connectée à la deuxième borne de sortie (10B) et une borne de la partie de résistance variable (VR) étant connectée à la première borne de sortie et l'autre borne de la partie de résistance variable étant connectée à la deuxième borne de sortie ; et
une partie de commande (31) qui émet un signal de commande destiné à modifier une valeur de résistance de la partie de résistance variable (VR) ;
le signal d'entrée de PWM étant lissé par le circuit RC (R5, C3) et une tension de rétroaction de la tension au niveau de la première borne de sortie (10A) étant émis vers l'amplificateur opérationnel (IC1) et la sortie de l'amplificateur opérationnel (IC1) étant fournie à la base du transistor de puissance (Tr1) et commandant le courant qui circule à travers le transistor de puissance (Tr1) de manière à commander la tension de sortie devant être appliquée à l'enroulement primaire du transformateur (T).

2. Circuit tel que défini dans la revendication 1, dans lequel
la partie de résistance variable (VR) comprend un transistor à étage unique (Tr11).

3. Circuit tel que défini dans la revendication 1, dans lequel
la partie de résistance variable (VR) comprend un transistor à étages multiples (Tr21, Tr22, Tr23).

4. Appareil de formation d'image (40) comprenant :
une unité de source d'alimentation comprenant un circuit tel que défini dans l'une quelconque des revendications 1 à 3 ; et
une partie de traitement qui utilise, en tant que polarisations, les tensions CC fournies par l'unité de source d'alimentation.
